(19) Europäisches Patentamt
European Patent Office
Office européen des brevets

(11) **EP 3 022 565 B1**

(12) **EUROPEAN PATENT SPECIFICATION**

(45) Date of publication and mention
of the grant of the patent:
**06.09.2017 Bulletin 2017/36**

(51) Int Cl.:
***G01P 13/02*** *(2006.01)*

(21) Application number: **14758675.4**

(86) International application number:
**PCT/IT2014/000180**

(22) Date of filing: **08.07.2014**

(87) International publication number:
**WO 2015/008308 (22.01.2015 Gazette 2015/03)**

(54) **SYSTEM AND PROCESS FOR MEASURING AND EVALUATING AIR AND INERTIAL DATA**

SYSTEM UND VERFAHREN ZUR MESSUNG UND AUSWERTUNG VON LUFT UND INERTEN DATEN

SYSTÈME ET PROCÉDÉ POUR MESURER ET ÉVALUER DES DONNÉES AÉROLOGIQUES ET INERTIELLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2013 IT TO20130601**

(43) Date of publication of application:
**25.05.2016 Bulletin 2016/21**

(73) Proprietors:
• **Gili, Piero**
  **10129 Torino (IT)**
• **Lerro, Angelo**
  **83100 Avellino (IT)**

(72) Inventors:
• **GILI, Piero**
  **I-10129 Torino (IT)**
• **BATTIPEDE, Manuela**
  **I-10129 Torino (IT)**
• **LERRO, Angela**
  **I-10129 Torino (IT)**

(74) Representative: **Garavelli, Paolo**
  **A.BRE.MAR. S.R.L.**
  **Consulenza in Proprietà Industriale**
  **Via Servais 27**
  **10146 Torino (IT)**

(56) References cited:
**EP-A2- 1 256 811      EP-A2- 1 256 863**

**Description**

The present invention refers to a system and a process for measuring and evaluating air and inertial data.

Ii is known that, for controlling and navigating an aircraft, it is mandatory to detect air data, such as speed and height, and some inertial parameter, such as yaw and roll angles. Furthermore, aircrafts using automatic navigation control systems need to measure further air data, comprising aerodynamic angles (incidence and skidding angles) and further inertial data, such as for example linear accelerations and angular speeds of the aircraft. Therefore, in order to have available a complete set of air and inertial data, currently multi-function systems are known, commonly called ADAHRS ("Air Data, Attitude & Heading Reference System"), in which, for every quantity of air data to be measured, a probe or sensor is used, dedicated to a direct measure of such quantity. Furthermore, for some types of aircrafts (for example "commuters" or bimotors), the above measuring systems of air and inertial data are made redundant, to comply with safety requirements required by aeronautical standards.

In particular, for air data systems (ADS), the following technologic systems are known, comprising a plurality of sensors and processing computers (ADC) of signals coming from such sensors:

- system with classical probes: such system has the advantage of being a consolidated technology, which can be easily found on the market at reduced costs, but has very big problems linked to overall sizes of the probes themselves and/or the mutual interference with optical or electro-optical sensors, and therefore it is scarcely suitable for aircrafts in which the reduction of sizes and weights and/or generated interferences, such as for example UAV ("Unmanned Aerial Vehicle") drones, are essential features;
- air data system of the "boom" type: such system has the problem of not being redundant due to problems linked to "boom" installation and interference with optical or electro-optical sensors: also these are particularly important problems on modern UAV due to generated interferences;
- system using multi-function probes: such system requires a smaller number of external probes with respect to the classical system and can be made redundant in spite of higher costs with respect to previous systems, though having again the problems linked to installation, requiring advanced positions.

The above systems exploit direct measures of air data and classical calibration methods (polynomials or tables), while there are some examples in literature which exploit different software techniques for calibrating or an estimation of a partial or complete set of air data. Examples of such systems are disclosed in US6466888, US4769759, US6273370, US6604029 and EP1256863 (which discloses a system according to the preamble of Claim 1). In particular:

- US6466888 discloses a method based on neural networks for estimating all air data without using external probes, mainly for estimating a speed and therefore particularly advisable for helicopters, but does not provide for any type of integrated and programmable platform;
- US6273370 discloses some mathematical algorithms which, by exploiting the measure of inertial accelerations, correct local measures of incidence and skidding angles, but does not provide any indirect measure of the above angles;
- US4769759 discloses a method, based on nonlinear mathematical models, for the indirect estimation of incidence and skidding angles exploiting inertial data, but requires a high computation capability and does not provide for any intetgrated and programmable platform for estimating the above angles;
- US6604029 discloses a methodology for compensating measures (through SMARTPROBE®) of incidence angle and of static pressure and neural networks when there is a side wind, by exploiting measures of air data and of inertial data, but does not provide for any indirect measure of $\alpha$ and/or $\beta$ or multi-sensor and programmable platform.

Further, the complexity of the above systems has further common problems, such as:

- the absorption of relatively high electric powers necessary for supplying the defrosting systems of external probes due to the number of external probes required for the direct measure of air data and/or of the computation capability necessary for their processing;
- a reliability linked to the presence of some mechanical sliding parts (such as, for example, the classical wings) and/or the environmental conditions which can affect the correct operation of external probes (for example, problems deriving from the presence of dust, water, etc.).

Currently, therefore, there are no ADAHRS systems capable of indirectly measuring aerodynamic angles without using dedicated sensors and through an integrated and programmable platform.

Object of the present invention is solving the above prior-art problems, by providing a system and a process for measuring and evaluating air and inertial data which allow an estimation of at least one of the aerodynamic angles indirectly, by exploiting analytical estimating devices or virtual sensors, consequently reducing the number of real sensors necessary for measuring the above aerodynamic angles and, consequently, weight, direct and maintenance costs, sizes and overall sizes in the fuselage, the problems deriving from mutual interferences of optical and electro-optical sensors and from installation and redundancy of the sensors themselves with respect to what is proposed by the prior art.

Further, an object of the present invention is providing a system and a process for measuring and evaluating air and inertial data, in which such indirect estimation occurs by exploiting soft-computing techniques, due to which it is possible to remove real sensors dedicated for such purpose, strongly simplifying both individual and redundant architectures of the measuring systems for air data on aircrafts, and requring computation capabilities which are currently available using commercial "off the shelf" microcontrollers/microprocessors.

Another object of the present invention is providing a system for measuring and evaluating air and inertial data which, though not having particular installation requirements and not requiring advanced positions in the fuselage for the external probe/s, is easy to be installed on board and extremely suitable to be made redundant.

Furthermore, an object of the present invention is providing a system for measuring and evaluating air and inertial data, which can be used as primary or stand-by system with the aim of voting-monitoring.

The above and other objects and advantages of the invention, as will appear from the following description, are obtained by a system for measuring and evaluating air and inertial data as claimed in Claim 1. Preferred embodiments and non-trivial variations of the present invention are claimed in the dependent Claims.

Moreover, the above and other objects and advantages of the invention are obtained by a process for measuring and evaluating air and inertial data as claimed in Claim 7. Preferred embodiments and non-trivial variations of the present invention are the subject matter of the dependent Claims.

It is intended that all enclosed claims are an integral part of the present disclosure.

It will be immediately obvious that numberus variations and modifications (for example related to shape, sizes, arrangements and parts with equivalent functionality) could be made to what is described, without departing from the scope of the invention as appears from the enclosed claims.

The present invention will be better described by some preferred embodiments thereof, given as a non-limiting example, with reference to the enclosed drawings, in which:

- Figures 1 and 2 respectively show a side view and a top view of an aircraft pointing out reference axes and aerodynamic angles;

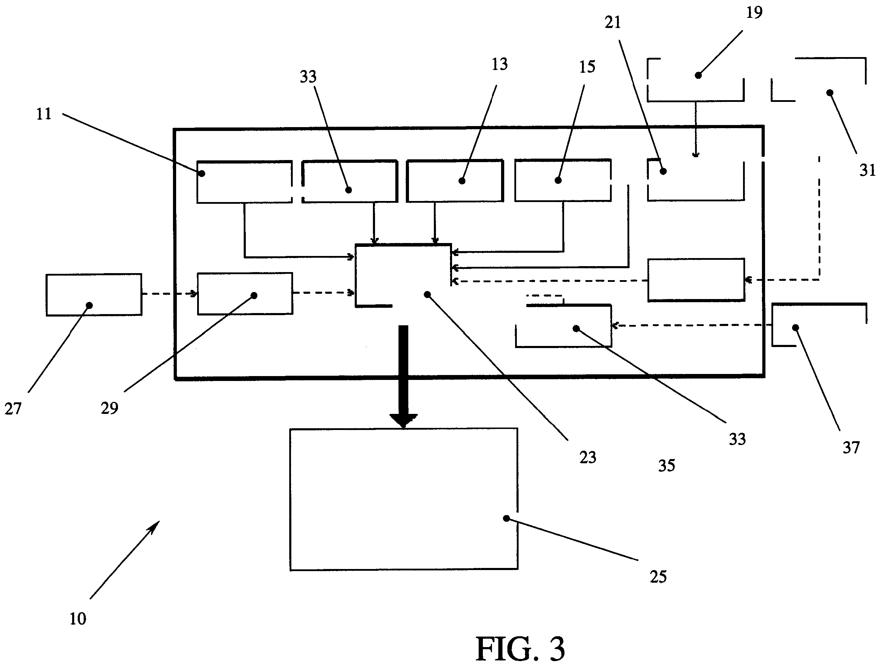

- Figure 3 shows a functional block diagram showing a preferred embodiment of the system according to the present invention;

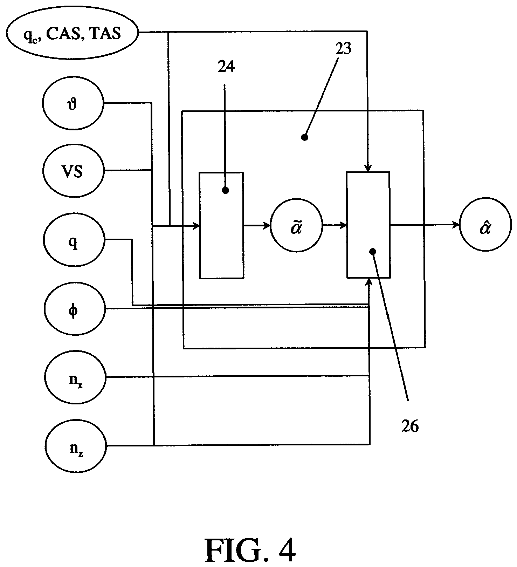

- Figure 4 shows a functional block diagram showing some computation steps of the process according to the present invention;

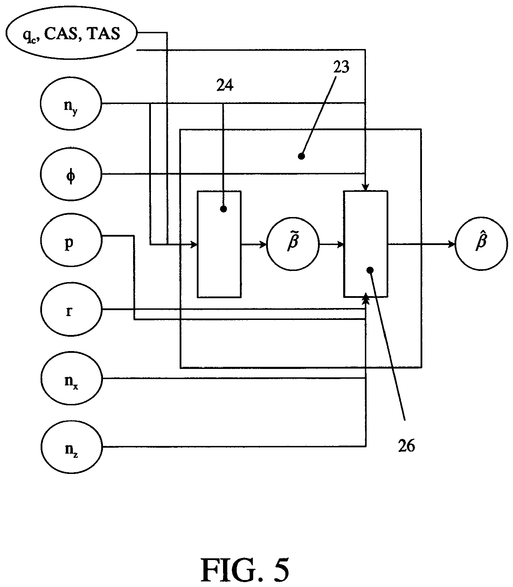

- Figure 5 shows a functional block diagram showing other computation steps of the system and of the process according to the present invention; and
- Figure 6 shows an example of neural network implementing the process according to the present invention.

In general, as can be described below in more detail, the system and the process according to the present invention are capable of providing a complete set of air data (comprising speed, height and at least aerodynamic angles) and inertial data of an aircraft through a set of "off the shelf" sensors comprising inertial sensors (preferably of the Micro Electro-Mechanical Systems, MEMS, type) and, advantageously, only two pressure transducers (two absolute ones or an absolute and a differential one), and through an integrated and programmable platform, preferably comprising at least one microcontroller of a standard type, capable of processing soft-computing techniques also through neural networks.

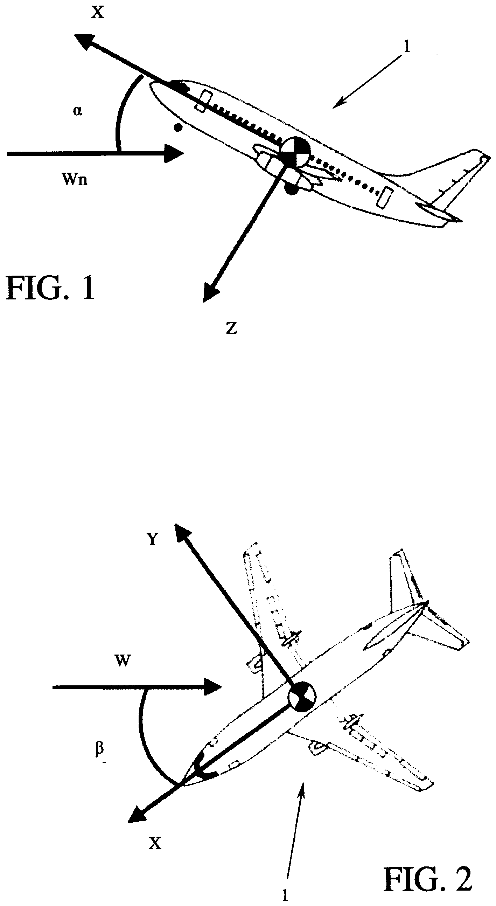

In particular, Figures 1 and 2 show an aircraft 1 with its related roll axis X, pitch axis Y and yaw axis Z with respect to which, herein below, we will define the quantities through which the system and process according to the present invention are capable of indirectly estimating at least the incidence angle $\alpha$ and the skidding angle P with respect to the relative wind direction Wn.

Therefore, with reference to the Figures, it is possible to note that the system 10 for measuring and evaluating air and inertial data of an aircraft 1 comprises:

- at least one pressure measuring system 19, 21 (comprising, for example, at least one means for measuring the static pressure and at least one means for measuring the total pressure, respectively detected with at least one differential pressure transducer and one absolute pressure transducer, or at least two absolute pressure transducers) adapted to directly or indirectly detect at least the values of dynamic pressure $q_c$ and possibly of static pressure $p_s$;
- at least one accelerometric measuring system 11 adapted to directly measure at least axial values $n_y$ and possibly $n_z$ of inertial acceleration with respect to such axes Y, Z: preferably, such accelerometric measuring system 11 is adapted to directly measure also the axial values $n_x$ of inertial acceleration with respect to such axis X;

- possibly at least one inclinometric measuring system 15 adapted to measure or compute at least values $\vartheta$ of attitude angle along axis X of said aircraft 1 with respect to the horizon: preferably, such inclinometric measuring system 15 is adapted to measure or compute anche values $\phi$ of the attitude angle along axis Y with respect to the horizon; and

- processing means 23 adapted to compute, for example through analytic estimating computing means 24, and provide 25:

    - at least one preliminary estimated value $\tilde{\alpha}$ of such incidence angle $\alpha$, where $\tilde{\alpha}$ = f(q$_c$, $\vartheta$, VS) and/or $\tilde{\alpha}$ = f(q$_c$, n$_z$), where VS is at least one Vertical Speed, VS, value computed by such processing means 23 depending on such values of static pressure p$_s$, such vertical speed value VS being preferably computed by deriving the barometric height obtained from measured static pressure values p$_s$;

    - at least one preliminary estimated value $\tilde{\beta}$ of such skidding angle $\beta$, where $\tilde{\beta}$ = f(q$_c$, n$_y$).

Preferably, the preliminary estimated value $\tilde{\alpha}$ of such incidence angle $\alpha$ can be computed through the following formula:

$$\tilde{\alpha} = \frac{1}{2}\left[K_\alpha \frac{Wn_z}{q_c}(1-\eta_\alpha) + \eta_\alpha\left(\vartheta - \tan^{-1}\frac{VS}{IAS}\right)\right]$$

where W is a characteristic weight of the aircraft 1 (for example the average weight between minimum weight and maximum weight), $\eta_\alpha$ is included between zero and one, according to the platform calibration level (for example, when calibrating the system 10, it is advisable to set $\eta_\alpha$ =1), K$_\alpha$ is a constant evaluated on a theoretical basis depending on aerodynamic and geometric characteristics of the aircraft 1 and computed again after a calibration step.

Always preferably, the preliminary estimated value $\tilde{\beta}$ of such skidding angle $\beta$ can therefore be computed through the following formula:

$$\tilde{\beta} = \frac{1}{2}\left[K_\beta \frac{Wn_y}{q_c}(1-\eta_\beta) + \eta_\beta\left(\tan^{-1}\frac{V_y}{IAS}\right)\right]$$

where W is the average weight of the aircraft 1 (meant as average weight between minimum weight and maximum weight), $\eta_\beta$ is included between zero and one, according to the plarform calibration level (for example, when calibrating the system 10, it is advisable to set $\eta_\beta$ = 0), K$_\beta$ is a constant theoretically evaluated based on the aerodynamic and geometric characteristics of the aircraft 1 and computed again after a calibration step, and V$_y$ is computed by integrating the axial value n$_y$ of inertial acceleration with respect to axis Y and, where a GPS is available, using GPS data.

Further, the system 10 according to the present invention can comprise at least one gyroscopic sensor 13 adapted to directly measure the axial values p, q, r of angular speeds with respect to such axes X, Y, Z.

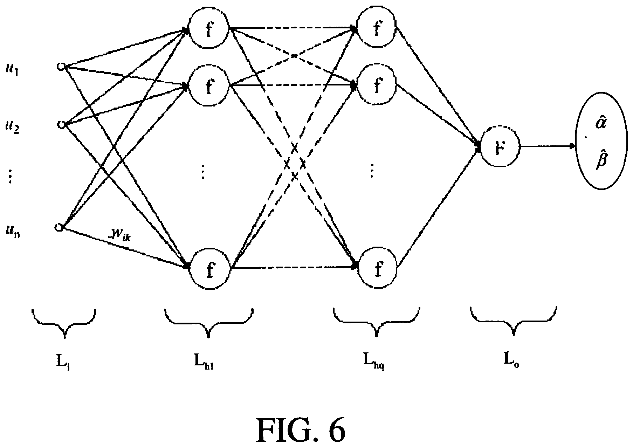

Alternatively or additionally, such processing means 23 can be adapted to compute, preferably through neural network computing means 26 according to a process as shown, as an example, in Figure 6, and to provide 25:

- at least one estimated value $\hat{\alpha}$ of such incidence angle $\alpha$, where $\hat{\alpha}$ = f($\tilde{\alpha}$);
- at least one estimated value $\hat{\beta}$ of such skidding angle $\beta$, where $\hat{\beta}$ = f($\tilde{\beta}$).

Preferably, the estimated value $\hat{\alpha}$ of such incidence angle $\alpha$ can be computed through the following formula:

$$\hat{\alpha} = F_\alpha \sum_{i=1}^{h}\left(w_{\alpha i}f_i\left(\sum_{k=1}^{n}w_{ik}x_{\alpha,k} + b_{k0}\right) + b_{\alpha 0}\right)$$

where F$_\alpha$ is the activation function of the last layer of neurons, $f_i$ is the activation function of the i-th layer of the neural network, $w_{ik}$ and $w_{\alpha i}$ are coefficients of the neural network characterized or computed during the calibration step of the virtual sensor, $b_{k0}$ and $b_{\alpha 0}$ the offsets of the neural network characterized or computed during the calibration step of the virtual sensor, h is the number of neurons of the hidden and output layer, n the number of elements of the input vector, $x_\alpha$ and $x_{\alpha,k}$ are at least one of the elements of the following input vector:

$$x_\alpha = \begin{bmatrix} \tilde{\alpha} & q_c & q & \phi & n_x & n_z \end{bmatrix}$$

In the general case, considering the offset as elements of vector $x_\alpha$, designating the new input vector $x^*_\alpha$ and considering for example h hidden layers, as shown in Figure 6, the previous formula becomes:

$$\hat{\alpha} = F_\alpha \sum_{i=0}^{H} \left( w_{\alpha i} f_i \cdots \left( \sum_{l=0}^{H} w_{rl} f_l \left( \sum_{k=0}^{N} w_{lk} x^*_{\alpha,k} \right) \right) \right)$$

where H is the increased number of neurons of hidden and output layers including the offset of each layer, N is the number of input vector elements also including the offset of the input layer, and in Figure 6, $L_i$ is the input layer, $L_{h1}$ is the first hidden layer, $L_{hq}$ is the i-th hidden layer and I is the output layer.

Further, always preferably, the estimated value $\hat{\beta}$ of such skidding angle β can be computed through the following formula:

$$\hat{\beta} = F_\beta \sum_{i=1}^{h} \left( w_{\beta i} f_i \left( \sum_{k=1}^{n} w_{ik} x_{\beta,k} + b_{k0} \right) + b_{\beta 0} \right)$$

where $F_\beta$ is the activation function of the last layer of neurons, $f_i$ is the activation function of the i-th layer of the neural network, $w_{ik}$ and $w_{\beta i}$ are coefficients of the neural network characterized or computed during the calibrating step of the virtual sensor, $b_{k0}$ and $b_{\beta 0}$ the offsets of the neural network characterized or computed during the calibrating step of the virtual sensor, h is the number of neurons of the hidden and output layer, n the number of elements of the input vector, $x_\beta$ and $x_{\beta,k}$ are at least one of the elements of the following input vector:

$$x_\beta = \begin{bmatrix} \tilde{\beta} & q_c & p & r & \phi & n_x & n_y & n_z \end{bmatrix}$$

In the general case, considering for example h hidden layers as shown in Figure 6, the previous formula becomes:

$$\hat{\beta} = F_\beta \sum_{i=0}^{H} \left( w_{\beta i} f_i \cdots \left( \sum_{l=0}^{H} w_{rl} f_l \left( \sum_{k=0}^{N} w_{lk} x^*_{\beta,k} \right) \right) \right)$$

where H is the increased number of neurons of the hidden and output layers including the offset of each layer, N is the number of elements of the input vector also including the offset of the input layer, and, in Figure 6, $L_i$ is the input layer, $L_{h1}$ is the first hidden layer, $L_{hq}$ is the i-th hidden layer and I is the output layer. In this case, the number of neurons h for every layer has been deemed constant for an easy description, but it is clear that every layer can contain any number of activation functions (or neurons).

Alternatively or additionally, the system 10 according to the present invention could comprise:

-   Global Positioning System, GPS, detecting means, preferably comprising at least one GPS antenna 27 cooperating with at least one related GPS receiver 29, adapted to detect the values of position and speed GS ("Ground Speed") with respect to the ground of the aircraft 1;
-   at least one temperature sensor 31 adapted to directly measure the values of (static or absolute) temperature T of the environment surrounding such aircraft 1;
-   at least one magnetometer 33 adapted to directly measure the bow values ψ with respect to the terrestrial magnetic North;
-   means 33, 35 for acquiring and transmitting to processing means 23 respectively analogue and digital signals coming from other sensors or subsystems 37 of the aircraft 1, such as, for example, the position of the actuators of the control surfaces (δ) or, for example, other probes adapted to directly measure the aerodynamic angles to be used when calibrating the system 10.

Alternatively or additionally, such processing means 23 can be adapted to compute and provide 25:

- at least one value of speed detected without corrections IAS ("Indicated Air Speed") and at least one value of speed detected with correction of the position errors CAS ("Calibrated Air Speed") through a calbration algorithm implemented in the system 10, such speed values IAS and CAS being computed preferably depending on the measured values of dynamic pressure $q_c$;
- at least one value of speed CAS corrected through the measure of temperature TAS ("True Air Speed"), such value of speed TAS being computed preferably depending on the measured values of dynamic pressure $q_c$ and temperature T;
- at least one value of the Mach number computed preferably depending on such measured values of static pressure $p_s$ and of dynamic pressure $q_c$.

It must be noted how in the computation of $\tilde{\alpha}$ and $\tilde{\beta}$, the value of dynamic pressure $q_c$ can be replaced, if available, by the values of speed CAS or TAS, and vice versa.
The present invention further deals with a process for measuring and evaluating air and inertial data of an aircraft 1, preferably through a system 10 according to the present invention as previously described, such process comprising the steps of:

- directly or indirectly detecting the values of dynamic pressure $q_c$, and possibly of static pressure $p_s$ and, for example through such absolute and differential pressure probe 19 of the system 10 according to the present invention;
- directly measuring at least the axial values $n_y$ and possibly $n_z$ of inertial acceleration of such aircraft 1 with respect to such axes Y, Z, for example through such accelerometric measuring system 11 of the system 10 according to the present invention;
- possibly measuring or computing the values $\vartheta$ of attitude angle of the axis X of said aircraft (1) with respect to the horizon, for example through such inclinometric measuring system 15 of the system 10 according to the present invention; and
- computing and providing, for example through such processing means 23, and in particular through such analytic estimating computing means 24, of the system 10 according to the present invention:

  - at least one preliminary estimated value $\tilde{\alpha}$ of such incidence angle $\alpha$, where $\tilde{\alpha}$ = f($q_c$, $\vartheta$, VS) and/or $\tilde{\alpha}$ = f($q_c$, $n_z$), where VS is at least one vertical speed value ("Vertical Speed") computed depending on such values of static pressure $p_s$, such vertical speed value VS being computed preferably by veriving the barometric height obtained from the measured values of static pressure $p_s$;
  - at least one preliminary estimated value $\tilde{\beta}$ of such skidding angle $\beta$, where $\tilde{\beta}$ = f($q_c$, $n_y$).

Preferably, the process according to the present invention comprises the step of computing such preliminary estimated value $\tilde{\alpha}$ of such incidence angle $\alpha$ through the following formula:

$$\tilde{\alpha} = \frac{1}{2}\left[ K_\alpha \frac{Wn_z}{q_c}(1-\eta_\alpha) + \eta_\alpha\left( \vartheta - \tan^{-1}\frac{VS}{q_c} \right) \right]$$

where W is a characteristic weight of the aircraft 1 (for example the average weight between minimum weight and maximum weight), $\eta_\alpha$ is included between zero and one, according to the calibration degree of the platform; for example, when calibrating the system 1, $\eta_\alpha = 1$ is advisable. $K_\alpha$ is a constant theoretically eveluated depending on the aerodynamic and geometric features of the aircraft 1 and computed again after a calibrating step.
Always preferably, the process according to the present invention comprises the steps of computing such preliminary estimated value $\tilde{\beta}$ of such skidding angle P through the following formula:

$$\tilde{\beta} = \frac{1}{2}\left[ K_\beta \frac{Wn_y}{q_c}(1-\eta_\beta) + \eta_\beta\left( \vartheta - \tan^{-1}\frac{V_y}{q_c} \right) \right]$$

where W is the average weight of the aircraft 1 (for example the average weight between minimum weight and maximum

weight), $\eta_\beta$ is included between zero and one, according to the calibration degree of the platform; for example, when calibrating the system 1, $\eta_\beta = 0$ is advisable. $K_\beta$ is a constant theoretically evaluated depending on aerodynamic and geometric characteristics of the aircraft 1 and computed again after a calibrating step and $V_y$ is computed by integrating the axial value $n_y$ of inertial acceleration with respect to axis Y and, where a GPS is available, using GPS data.

Further, the process according to the present invention can comprise the steps of:

- directly measuring the axial values $n_x$ of inertial acceleration with respect to such axis X, for example always through such accelerometric measuring system 11;
- directly measuring the values $\phi$ of the attitude angle of axis Y of said aircraft (1) with respect to the horizon: for example always through such inclinometric measuring system 15;
- directly measuring the axial values p, q, r of angular speeds with respect to such axes X, Y, Z, for example through such gyroscopic sensor 13 of the system 10 according to the present invention.

Alternatively or additionally, the process according to the present invention can comprise the steps of computing, for example through such processing means 23, and in particular through such neural network computing means 26 according to a process as shown as an example in Figure 6, and providing:

- at least one estimated value $\hat{\alpha}$ of such incidence angle $\alpha$, where $\hat{\alpha} = f(\tilde{\alpha})$;

- at least one estimated value $\hat{\beta}$ of such skidding angle $\beta$, where $\hat{\beta} = f(\tilde{\beta})$.

Preferably, the process according to the present invention comprises the step of computing such estimated value $\hat{\alpha}$ of such incidence angle $\alpha$ through the following formula:

$$\hat{\alpha} = F_\alpha \sum_{i=1}^{h} \left( w_{\alpha i} f_i \left( \sum_{k=1}^{n} w_{ik} x_{\alpha,k} + b_{k0} \right) + b_{\alpha 0} \right)$$

where $F_\alpha$ is the activation function of the last layer of neurons, $f_i$ is the activation function of the i-th layer of the neural network, $w_{ik}$ and $w_{\alpha i}$ are coefficients of the neural network characterized or computed during the calibrating step of the virtual sensor, $b_{k0}$ and $b_{\alpha 0}$ are the offsets of the neural network characterized or computed during the calibrating step of the virtual sensor, h is the number of neurons of the hidden and output layer, n the number of elements of the input vector $x_\alpha$ and $x_{\alpha,k}$ are at least one of the elements of the following input vector:

$$x_\alpha = \begin{bmatrix} \tilde{\alpha} & q_c & q & \phi & n_x & n_z \end{bmatrix}$$

In the general case, considering the offset as one of the elements of the vector $x_\alpha$, designating the new input vector as $x^*_\alpha$ and considering for example h hidden layers as shown in Figure 6, the previous formula becomes:

$$\hat{\alpha} = F_\alpha \sum_{i=0}^{H} \left( w_{\alpha i} f_i \dots \left( \sum_{l=0}^{H} w_{rl} f_l \left( \sum_{k=0}^{N} w_{lk} x^*_{\alpha,k} \right) \right) \right)$$

where H is the increased number of neurons of the hidden and output layers including the offsets of each layer, N is the number of the elements of the input vector also including the offset of the input layer, and in Figure 6, $L_i$ is the input layer, $L_{h1}$ is the first hidden layer, $L_{hq}$ is the h-th hidden layer and I is the output layer.

Further, always preferably, the process according to the present invention comprises the step of computing such estimated value $\hat{\beta}$ of such skidding angle $\beta$ through the following formula:

$$\hat{\beta} = F_\beta \sum_{i=1}^{h} \left( w_{\beta i} f_i \left( \sum_{k=1}^{n} w_{ik} x_{\beta,k} + b_{k0} \right) + b_{\beta 0} \right)$$

where $F_\beta$ is the activation function of the last layer of neurons, $f_i$ is the activation function of the i-th layer of the neural network, $w_{ik}$ and $w_{\beta i}$ are coefficients of the neural network characterized or computed during the calibrating step of the virtual sensor, $b_{k0}$ and $b_{\beta 0}$ are the offsets of the neural network characterized or computed during the calibrating step of the virtual sensor, h is the number of neurons of the hidden and output layers, n the number of elements of the input vector, $x_\beta$ and $x_{\beta,k}$ are at least one of the elements of the following input vector:

$$x_\beta = \begin{bmatrix} \tilde{\beta} & q_c & p & r & \phi & n_x & n_y & n_z \end{bmatrix}$$

In the general case, considering for example h hidden layers as shown in Figure 6, the previous formula becomes:

$$\hat{\beta} = F_\beta \sum_{i=0}^{H} \left( w_{\beta i} f_i \dots \left( \sum_{l=0}^{H} w_{rl} f_l \left( \sum_{k=0}^{N} w_{lk} x_{\beta,k}^* \right) \right) \right)$$

where H is the increased number of neurons of the hidden and output layers including the offsets of each layer, N is the number of the elements of the input vector also including the offset of the input layer, and, in Figure 6, $L_i$ is the input layer, $L_{h1}$ is the first hidden layer, $L_{hq}$ is the h-th hidden layer and I is the output layer. In this case, the number of neurons h for each layer has been deemed constant for an easy description, but it is clear that every layer can contain any number of activation functions (or neurons).

Alternatively or additionally, the process according to the present invention could comprise the steps of:

- detecting the values of position and of speed GS ("Ground Speed") with respect to the ground of the aircraft 1, for example through such Global Positioning System, GPS, detecting means, of the system 10 according to the present invention;
- directly measuring the values of (static and/or total) temperature T of the environment surrounding such aircraft 1, for example through such temperature sensor 31 of the system 10 according to the present invention;
- directly measuring the values $\psi$ of bow angle, for example with respect to the terrestrial magnetic North through such magnetometer 33 of the system 10 according to the present invention;
- acquiring and processing, for example through such means 23, 33, 35 of the system 10 according to the present invention, analogue and digital signals coming from other sensors or subsystems of the aircraft 1, such as, for example, the position of the actuators of the control surfaces (5) or, for example, other probes adapted to directly measure the aerodynamic angles to be used when calibrating the system 10.

Alternatively or additionally, the process according to the present invention comprises the steps of:

- computing at least one value of speed detected without corrections IAS ("Indicated Air Speed") and at least one value of speed detected with correction of the position errors CAS ("Calibrated Air Speed") through a calibration algorithm implemented in the system 10, such speed values IAS and CAS being computed preferably depending on the measured values of dynamic pressure $q_c$;
- computing at least one value of speed CAS corrected through the measure of temperature TAS ("True Air Speed"), such value of speed TAS being computed preferably depending on the measured values of dynamic pressure $q_c$ and temperature T;
- computing at least one value of the Mach number computed preferably depending on such measured values of static pressure $p_s$ and of dynamic pressure $q_c$.

It can be noted how, advantageously, in the steps of computing $\tilde{\alpha}$ and $\tilde{\beta}$, the value of dynamic pressure $q_c$ can be replaced, if available, by the speed value TAS, and vice versa. It is wholly clear that the present invention further refers to at least one computer program comprising computer program code means adapted to perform all or parts of the steps of the above process when such program is executed by the processing means 23.

**Claims**

1. System (10) for measuring and evaluating air and inertial data of an aircraft (1) for indirectly estimating at least one incidence angle $\alpha$ and one skidding angle P with respect to a relative wind direction Wn of said aircraft (1), comprising:

- at least one pressure measuring system (19, 21) adapted to directly or indirectly detect at least values of dynamic pressure $q_c$ and possibly of static pressure $p_s$;
- at least one accelerometric measuring system (11) adapted to directly measure at least axial values $n_y$ of inertial acceleration of said aircraft (1) with respect to a pitch axis Y of said aircraft (1) ;
- processing means (23) adapted to compute and provide (25):

- at least one preliminary estimated value $\tilde{\alpha}$ of said incidence angle $\alpha$;
- at least one preliminary estimated value $\tilde{\beta}$ of said skidding angle $\beta$, were $\tilde{\beta}$ = f($q_c$, $n_y$)

**characterized in that**:

- said at least one accelerometric measuring system (11) is adapted to directly measure possibly $n_z$ with respect to a yaw axis Z of said aircraft (1);
- the system (10) further comprises at least one inclinometric measuring system (15) adapted to measure or compute the values $\vartheta$ of an attitude angle of a roll axis X of said aircraft (1) with respect to the horizon; and
- said processing means (23) are adapted to compute and provide (25) the at least one preliminary estimated value $\tilde{\alpha}$ of said incidence angle $\alpha$, where $\tilde{\alpha}$ = f($q_c$, $\vartheta$, VS) and/or $\tilde{\alpha}$ = f($q_c$, $n_z$), where VS is at least one Vertical Speed value computed by said processing means (23) depending on said values of static pressure $p_s$.

2. System (10) according to the previous claim, **characterized in that** said processing means (23) are adapted to compute:

- at least one estimated value $\hat{\alpha}$ of said incidence angle $\alpha$, where $\hat{\alpha}$ = f($\tilde{\alpha}$);
- at least one estimated value $\hat{\beta}$ of said skidding angle $\beta$, where $\hat{\beta}$ = f($\tilde{\beta}$).

3. System (10) according to the previous claim, **characterized in that** said processing means (23) comprise analytic estimating computing means (24) adapted to compute said preliminary estimated values $\tilde{\alpha}$ and $\tilde{\beta}$ and computing means (26) adapted to compute said estimated values $\hat{\alpha}$ and $\hat{\beta}$.

4. System (10) according to claim 1, **characterized in that** said accelerometric measuring system (11) is adapted to directly measure the axial values $n_x$ of inertial acceleration with respect to said axis X, and **in that** said inclinometric measuring system (15) is adapted to measure or compute the values $\phi$ of an attitude angle of axis Y of said aircraft (1) with respect to the horizon.

5. System (10) according to claim 1, **characterized in that** it comprises:

- at least one gyroscopic sensor (13) adapted to directly measure the axial values p, q, r of angular speeds with respect to said axes X, Y, Z; and/or
- Global Positioning System, GPS, detecting means adapted to detect the values of position and of speed, Ground Speed, GS, with respect to the ground of said aircraft (1); and/or
- at least one static and/or total temperature sensor (31) adapted to directly measure the values of temperature T of an environment surrounding said aircraft (1); and/or
- at least one magnetometer (33) adapted to directly measure the values $\psi$ of bow angle with respect to the terrestrial magnetic North; and/or
- means (33, 35) for acquiring and transmitting to said processing means (23) analogue and digital signals coming from other sensors or subsystems (37) of said aircraft (1).

6. System (10) according to claim 1, **characterized in that** said processing means (23) are adapted to compute and provide (25):

- at least one value of speed detected without corrections, Indicated Air Speed, IAS, and at least one value of speed detected with correction of the position errors, Calibrated Air Speed, CAS; and/or
- at least one speed value CAS corretta through the measure of temperature, True Air Speed, TAS; and/or
- at least one value of the Mach number.

7. Process for measuring and evaluating air and inertial data of an aircraft (1), preferably through a system (10) according to any one of the previous claims, for indirectly estimating at least one incidence angle $\alpha$ and one skidding

angle P with respect to a relative wind direction Wn of said aircraft (1), the process comprising the steps of:

- directly or indirectly detecting the values of dynamic pressure $q_c$ and possibly of static pressure $p_s$ ;
- directly measuring at least the axial values $n_y$ of inertial acceleration of said aircraft (1) with respect to a pitch axis Y of said aircraft (1) ;
- computing and providing at least one preliminary estimated value $\tilde{\beta}$ of said skidding angle $\beta$, where $\tilde{\beta}= f(q_c, n_y)$;

**characterized in that** the process further comprises the steps of:

- possibly directly measuring some axial values $n_z$ with respect to a yaw axis Z of said aircraft (1);
- possibly measuring or computing the values $\vartheta$ of an attitude angle of a roll axis X of said aircraft (1) with respect to the horizon; and
- computing and providing the at least one preliminary estimated value $\tilde{\alpha}$ of said incidence angle $\alpha$, were $\tilde{\alpha} = f(q_c, \vartheta, VS)$ and/or $\tilde{\alpha} = f(q_c, n_z)$, where VS is at least one Vertical Speed value computed depending on said values of static pressure $p_s$.

8. Process according to the previous claim, **characterized in that** it comprises the steps of:

- computing said preliminary estimated value $\tilde{\alpha}$ of said incidence angle $\alpha$ through the following formula:

$$\widetilde{\alpha} = \frac{1}{2}\left[ K_\alpha \frac{Wn_z}{q_c}\left(1-\eta_\alpha\right) + \eta_\alpha\left(\vartheta - \tan^{-1}\frac{VS}{q_c}\right)\right] ;$$

- computing said preliminary estimated value $\tilde{\beta}$ of said skidding angle $\beta$ through the following formula:

$$\widetilde{\beta} = \frac{1}{2}\left[ K_\beta \frac{Wn_y}{q_c}\left(1-\eta_\beta\right) + \eta_\beta\left(\tan^{-1}\frac{V_y}{q_c}\right)\right] ;$$

where W is a characteristic weight of said aircraft (1), $K_\alpha$ and $K_\beta$ are constants theoretically evaluated depending on the aerodynamic and geometric characteristics of said aircraft (1) and computed again after a calibrating step, $\eta_\alpha$ and $\eta_\beta$ are constants included between zero and one, according to the calibration level of the platform, $V_y$ is computed by integrating said axial value $n_y$ of inertial acceleration with respect to said axis Y.

9. Process according to any one of claims 7 or 8, **characterized in that** it comprises the steps of:

- directly measuring the axial values $n_x$ of inertial acceleration with respect to said axis X; and/or
- directly measuring the values $\phi$ of attitude angle of axis Y of said aircraft (1) with respect to the horizon; and/or
- directly measuring the axial values p, q, r of angular speeds with respect to said axes X, Y, Z.

10. Process according to any one of claims 7 to 9, **characterized in that** it comprises the steps of computing and providing:

- at least one estimated value $\hat{\alpha}$ of said incidence angle $\alpha$, where $\hat{\alpha} = f(\tilde{\alpha})$;
- at least one estimated value $\hat{\beta}$ of said skidding angle $\beta$, where $\hat{\beta} = f(\tilde{\beta})$.

11. Process according to the previous claim, **characterized in that** it comprises the steps of:

- computing said estimated value $\hat{\alpha}$ of said incidence angle $\alpha$ through the following formula:

$$\hat{\alpha} = F_\alpha \sum_{i=1}^{h}\left( w_{\alpha i}' f_i\left( \sum_{k=1}^{n} w_{ik} x_{\alpha,k} + b_{k0}\right) + b_{\alpha 0}\right)$$

where $x_{\alpha,k}$ is at least one element of the following vector

$$x_\alpha = \begin{bmatrix} \tilde{\alpha} & q_c & q & \phi & n_x & n_z \end{bmatrix};$$

- computing said estimated value $\hat{\beta}$ of said skidding angle $\beta$ through the following formula:

$$\hat{\beta} = F_\beta \sum_{i=1}^{h} \left( w_{\beta i} f_i \left( \sum_{k=1}^{n} w_{ik} x_{\beta,k} + b_{k0} \right) + b_{\beta 0} \right)$$

where $x_{\beta,k}$ is at least one element of the following vector

$$x_\beta = \begin{bmatrix} \tilde{\beta} & q_c & p & r & \phi & n_x & n_y & n_z \end{bmatrix};$$

where $F_{\alpha/\beta}$ is the activation function of the last layer of neurons, $f_i$ is the activation function of the i-th layer of the neural network, $w_{ik}$ and $w_{\alpha/\beta i}$ are coefficients of the neural network characterized or computed during the calibrating step of the virtual sensor, $b_{k0}$ and $b_{\alpha/\beta 0}$ are the offsets of the neural network characterized or computed during the calibrating step of the virtual sensor, h is the number of neurons of the hidden and output layers, n is the number of elements of the input vector $x_{\alpha/\beta}$.

**12.** Process according to any one of claims 7 to 11, **characterized in that** it comprises the steps of:

- detecting the values of position and of speed, Ground Speed, GS, with respect to the ground of said aircraft (1); and/or
- directly measuring the values of static or absolute temperature (T) of an environment surrounding said aircraft (1); and/or
- directly measuring the bow values $\psi$ with respect to the terrestrial magnetic North; and/or
- acquiring and processing the analogue and digital signals coming from other sensors or subsystems of said aircraft (1).

**13.** Process according to any one of claims 7 to 12, **characterized in that** it comprises the steps of:

- computing at least one value of speed detected without corrections, Indicated Air Speed, IAS, and at least one value of speed detected with correction of the position errors, Calibrated Air Speed, CAS; and/or
- computing at least one speed value CAS corrected through the measure of temperature, True Air Speed, TAS; and/or
- computing at least one value of the Mach number.

**Patentansprüche**

**1.** Messsystem (10) der Luft- und Trägheitsdaten eines Flugzeugs (1), um indirekt mindestens einen Einfallswinkel $\alpha$ und einen Schiebewinkel $\beta$ gegenüber einer relativen Windrichtung Wn des genannten Flugzeugs (1) zu schätzen, das Folgendes enthält:

- mindestens ein Druckmesssystem (19, 21), das dazu dient, direkt oder indirekt mindestens dynamische Druckwerte $q_c$ und ggf. statische Druckwerte $p_s$ zu erfassen;
- mindestens ein Beschleunigungsmesssystem (11), das dazu dient, direkt mindestens Axialwerte $n_y$ der Trägheitsbeschleunigung des genannten Flugzeugs (1) gegenüber einer Nickachse Y des genannten Flugzeugs (1) zu messen;
- Verarbeitungsvorrichtungen (23), die zur Berechnung und Angabe (25) folgender Werte dienen:

- mindestens eines einleitenden geschätzten Werts $\tilde{\alpha}$ des genannten Einfallswinkels $\alpha$;
- mindestens eines einleitenden geschätzten Werts $\tilde{\beta}$ des genannten Schiebewinkels $\beta$, wo $\tilde{\beta}$ = f($q_c$, $n_y$)

und ist **dadurch gekennzeichnet, dass**:

- das genannte, mindestens eine Beschleunigungsmesssystem (11) dazu dient, direkt ggf. $n_z$ gegenüber einer Gierachse Z des genannten Flugzeugs (1) zu messen;
- das System (10) außerdem mindestens ein Neigungsmesssystem (15) enthält, das dazu dient, die Werte $\vartheta$ eines Einstellwinkels einer Rollachse X des genannten Flugzeugs (1) gegenüber dem Horizont zu messen; und
- dass die genannten Verarbeitungsvorrichtungen (23) dazu dienen, mindestens einen einleitenden geschätzten Wert $\tilde{\alpha}$ des genannten Einfallswinkels $\alpha$ zu berechnen und anzugeben (25), wo $\tilde{\alpha} = f(q_c, \vartheta, VS)$ und/oder $\tilde{\alpha} = f(q_c, n_z)$, wo VS mindestens ein vertikaler Geschwindigkeitswert, "Vertical Speed", ist, der durch die genannten Verarbeitungsvorrichtungen (23) aufgrund der genannten statischen Druckwerte $p_s$ berechnet wird.

2. System (10) gemäß dem vorhergehenden Patentanspruch, das **dadurch gekennzeichnet ist, dass** die genannten Verarbeitungsvorrichtungen (23) dazu dienen, Folgendes zu berechnen:

- mindestens einen einleitenden geschätzten Wert $\hat{\alpha}$ des genannten Einfallswinkels $\alpha$, wo $\hat{\alpha} = f(\tilde{\alpha})$;
- mindestens einen einleitenden geschätzten Wert $\hat{\beta}$ des genannten Schiebewinkels $\beta$, wo $\hat{\beta} = f(\tilde{\beta})$.

3. System (10) gemäß dem vorhergehenden Patentanspruch, das **dadurch gekennzeichnet ist, dass** die genannten Verarbeitungsvorrichtungen (23) analytische schätzende Rechenvorrichtungen (24) enthalten, die dazu dienen, die genannten einleitenden geschätzten Werte $\tilde{\alpha}$ und $\tilde{\beta}$ zu berechnen, und Rechenvorrichtungen (26), die dazu dienen, die genannten geschätzten Werte $\hat{\alpha}$ und $\hat{\beta}$ zu berechnen.

4. System (10) gemäß Patentanspruch 1, das **dadurch gekennzeichnet ist, dass** das genannte Beschleunigungsmesssystem (11) dazu dient, direkt Axialwerte $n_x$ der Trägheitsbeschleunigung gegenüber der genannten Achse X zu messen, und dadurch, dass das genannte Neigungsmesssystem (15) dazu dient, die Werte $\phi$ eines Einstellwinkels der Achse Y des genannten Flugzeugs (1) gegenüber dem Horizont zu messen oder zu berechnen.

5. System (10) gemäß Patentanspruch 1, das **dadurch gekennzeichnet ist, dass** es Folgendes enthält:

- mindestens einen Kreiselsensor (13), der dazu dient, direkt die Axialwerte p, q, r der Winkelgeschwindigkeiten gegenüber den genannten Achsen X, Y, Z zu messen; und/oder
- GPS-Erfassungssysteme ("Global Positioning System"), die dazu dienen, die GS-Positions- und Geschwindigkeitswerte, "Ground Speed", gegenüber dem Boden des genannten Flugzeugs (1) zu erfassen; und/oder
- mindestens einen statischen und/oder Gesamttemperatursensor (31), der dazu dient, direkt die Temperaturwerte T eines Umkreises des genannten Flugzeugs (1) zu messen; und/oder
- mindestens ein Magnetometer (33), das dazu dient, direkt die vorderen Winkelwerte $\psi$ gegenüber der erdmagnetischen Nordrichtung zu messen; und/oder
- Erfassungs- und Sendevorrichtungen (33, 35) der genannten Verarbeitungsvorrichtungen (23) für Analog- und Digitalsignale, die von anderen Sensoren oder Untersystemen (37) des genannten Flugzeugs (1) kommen.

6. System (10) gemäß Patentanspruch 1, das **dadurch gekennzeichnet ist, dass** die genannten Verarbeitungsvorrichtungen (23) dazu dienen, Folgendes zu berechnen und anzugeben (25):

- mindestens einen Geschwindigkeitswert, der ohne Korrekturen IAS, "Indicated Air Speed", erfasst wird, und mindestens einen Geschwindigkeitswert, der mit Fehlerkorrektur CAS, "Calibrated Air Speed" erfasst wird; und/oder
- mindestens einen Geschwindigkeitswert CAS, der durch die Temperaturmessung TAS, "True Air Speed" korrigiert wird; und/oder
- mindestens einen Wert der Machnummer.

7. Mess- und Auswertungsverfahren der Luft- und Trägheitsdaten eines Flugzeugs (1), vorzugsweise durch ein System (10) gemäß einem beliebigen der vorhergehenden Patentansprüche, um indirekt mindestens einen Einfallswinkel $\alpha$ und einen Schiebewinkel $\beta$ gegenüber einer relativen Windrichtung Wn des genannten Flugzeugs (1) zu schätzen, das Verfahren enthält folgende Phasen:

- direkte oder indirekte Erfassung der dynamischen Druckwerte $q_c$ und ggf. der statischen Druckwerte $p_s$;

- direkte Messung mindestens der Axialwerte $n_y$ der Trägheitsbeschleunigung des genannten Flugzeugs (1) gegenüber einer Nickachse Y des genannten Flugzeugs (1)
- Berechnung und Angabe von mindestens einem einleitenden geschätzten Wert $\tilde{\beta}$ des genannten Schiebewinkels $\beta$, wo $\tilde{\beta} = f(q_c, n_y)$;

Das System ist **dadurch gekennzeichnet, dass** das Verfahren außerdem folgende Phasen einschließt:

- ggf. direkte Messung einiger Axialwerte $n_z$ gegenüber einer Gierachse Z des genannten Flugzeugs (1);
- ggf. Messung oder Berechnung der Werte $\vartheta$ eines Einstellwinkels einer Rollachse X des genannten Flugzeugs (1) gegenüber dem Horizont; und
- Berechnung und Angabe von mindestens einem einleitenden geschätzten Wert $\tilde{\alpha}$ des genannten Einfallswinkels $\alpha$, wo $\tilde{\alpha} = f(q_c, \vartheta, VS)$ und/oder $\tilde{\alpha} = f(q_c, n_z)$, wo VS mindestens ein vertikaler Geschwindigkeitswert, "Vertical Speed", ist, der aufgrund der genannten statischen Druckwerte $p_s$ berechnet wird.

**8.** Verfahren gemäß dem vorhergehenden Patentanspruch, das **dadurch gekennzeichnet ist, dass** es folgende Phasen einschließt:

- Berechnung des genannten einleitenden geschätzten Werts $\tilde{\alpha}$ des genannten Einfallswinkels $\alpha$ durch die folgende Formel:

$$\tilde{\alpha} = \frac{1}{2}\left[ K_\alpha \frac{Wn_z}{q_c}(1 - \eta_\alpha) + \eta_\alpha\left( \vartheta - \tan^{-1}\frac{VS}{q_c} \right) \right];$$

- Berechnung des genannten einleitenden geschätzten Werts $\tilde{\beta}$ des genannten Schiebewinkels $\beta$ durch die folgende Formel:

$$\tilde{\beta} = \frac{1}{2}\left[ K_\beta \frac{Wn_y}{q_c}(1 - \eta_\beta) + \eta_\beta\left( \tan^{-1}\frac{V_y}{q_c} \right) \right];$$

wo W ein charakteristisches Gewicht des genannten Flugzeugs (1) ist, $K_\alpha$ und $K_\beta$ Konstanten sind, die theoretisch aufgrund der aerodynamischen und geometrischen Eigenschaften des genannten Flugzeugs (1) bewertet werden und nach einer Eichphase neu berechnet werden, $\eta_\alpha$ und $\eta_\beta$ Konstanten zwischen null und eins sind, je nach dem Eichniveau der Plattform, $V_y$ durch Integration des genannten Axialwerts $n_y$ der Trägheitsbeschleunigung gegenüber der genannten Achse Y berechnet wird.

**9.** Verfahren gemäß einem beliebigen der Patentansprüche 7 oder 8, das **dadurch gekennzeichnet ist, dass** es folgende Phasen einschließt:

- direkte Messung der Axialwerte $n_x$ der Trägheitsbeschleunigung gegenüber der genannten Achse X; und/oder
- direkte Messung der Werte $\phi$ des Einstellwinkels der Achse Y des genannten Flugzeugs (1) gegenüber dem Horizont; und/oder
- direkte Messung der Axialwerte p, q, r der Winkelgeschwindigkeiten gegenüber den genannten Achsen X, Y, Z.

**10.** Verfahren gemäß einem beliebigen der Patentansprüche von 1 bis 9, das **dadurch gekennzeichnet ist, dass** es folgende Phasen der Berechnung und Angabe einschließt:

- mindestens einen einleitenden geschätzten Wert $\hat{\alpha}$ des genannten Einfallswinkels $\alpha$, wo $\hat{\alpha} = f(\tilde{\alpha})$;
- mindestens einen einleitenden geschätzten Wert $\hat{\beta}$ des genannten Schiebewinkels $\beta$, wo $\hat{\beta} = f(\tilde{\beta})$.

**11.** Verfahren gemäß dem vorhergehenden Patentanspruch, das **dadurch gekennzeichnet ist, dass** es folgende Phasen einschließt:

- Berechnung des genannten einleitenden geschätzten Werts $\hat{\alpha}$ des genannten Einfallswinkels $\alpha$ durch die folgende Formel:

$$\hat{\alpha} = F_\alpha \sum_{i=1}^{h} \left( w_{\alpha i} f_i \left( \sum_{k=1}^{n} w_{ik} x_{\alpha,k} + b_{k0} \right) + b_{\alpha 0} \right)$$

wo $x_{\alpha,k}$ mindestens ein Element des folgenden Vektors ist

$$x_\alpha = \begin{bmatrix} \tilde{\alpha} & q_c & q & \phi & n_x & n_z \end{bmatrix};$$

- Berechnung des genannten einleitenden geschätzten Werts $\hat{\beta}$ des genannten Schiebewinkels $\beta$ durch die folgende Formel:

$$\hat{\beta} = F_\beta \sum_{i=1}^{h} \left( w_{\beta i} f_i \left( \sum_{k=1}^{n} w_{ik} x_{\beta,k} + b_{k0} \right) + b_{\beta 0} \right)$$

wo $x_{\beta,k}$ mindestens ein Element des folgenden Vektors ist

$$x_\beta = \begin{bmatrix} \tilde{\beta} & q_c & p & r & \phi & n_x & n_y & n_z \end{bmatrix};$$

wo $F_{\alpha/\beta}$ die Aktivierungsfunktion der letzten Neuronenschicht ist, $f_i$ die Aktivierungsfunktion der i-ten Schicht des Neuronennetzes ist, $w_{ik}$ und $w_{\alpha/\beta i}$ Koeffizienten des Neuronennetzes sind, die während der Eichphase des virtuellen Sensors gekennzeichnet oder berechnet werden, $b_{k0}$ und $b_{\alpha/\beta 0}$ die Offsets des Neuronennetzes sind, die während der Eichphase des virtuellen Sensors gekennzeichnet oder berechnet werden, h die Anzahl der Neuronen der versteckten und Ausgangsschicht ist, n die Anzahl der Elemente des Input-Vektors $x_{\alpha/\beta}$ ist.

12. Verfahren gemäß einem beliebigen der Patentansprüche von 7 bis 11, das **dadurch gekennzeichnet ist, dass** es folgende Phasen einschließt:

- Erfassung der GS-Positions- und Geschwindigkeitswerte, "Ground Speed", gegenüber dem Boden des genannten Flugzeugs (1); und/oder
- direkte Messung der statischen oder absoluten Temperaturwerte (T) in einem Umkreis des genannten Flugzeuges (1); und/oder
- direkte Messung der vorderen Winkelwerte ψ gegenüber der erdmagnetischen Nordrichtung; und/oder
- Erfassung und Verarbeitung der Analog- und Digitalsignale, die von anderen Sensoren oder Untersystemen des genannten Flugzeugs (1) kommen.

13. Verfahren gemäß einem beliebigen der Patentansprüche von 7 bis 12, das **dadurch gekennzeichnet ist, dass** es folgende Phasen einschließt:

- Berechnung von mindestens einem Geschwindigkeitswert, der ohne Korrekturen IAS, "Indicated Air Speed", erfasst wird, und mindestens einem Geschwindigkeitswert, der mit Fehlerkorrektur CAS, "Calibrated Air Speed" erfasst wird; und/oder
- Berechnung von mindestens einem Geschwindigkeitswert CAS, der durch die Temperaturmessung TAS, "True Air Speed" korrigiert wird; und/oder
- Berechnung von mindestens einem Wert der Machnummer.

**Revendications**

1. Système (10) de mesure et d'évaluation des données d'air et inertielles d'un appareil volant (1) pour estimer de manière indirecte au moins un angle d'incidence α et un angle de dérapage β par rapport à une direction du vent relative Wn de l'appareil volant (1), comprenant :

- au moins un système de mesure (19, 21) de pression apte à relever, directement ou indirectement, des valeurs de pression dynamique $q_c$ et éventuellement de pression statique $p_s$;
- au moins un système de mesure accélérométrique (11) apte à mesurer directement des valeurs axiales $n_y$ d'accélération inertielle de l'appareil volant (1) par rapport à un axe de tangage Y de l'appareil volant (1) ;
- moyens d'élaboration (23) en mesure de calculer et de fournir (25) :

  - au moins une valeur estimée préliminaire $\tilde{\alpha}$ de l'angle d'incidence $\alpha$ ;
  - au moins une valeur estimée préliminaire $\tilde{\beta}$ de l'angle de dérapage $\beta$, où $\tilde{\beta}$ = f($q_c$, $n_y$)

**caractérisé en ce que** :

  - le système de mesure accélérométrique (11) est apte à mesurer directement $n_z$ par rapport à un axe de lacet Z de l'appareil volant (1) ;
  - le système (10) comprend en outre au moins un système de mesure inclinométrique (15) apte à mesurer ou à calculer les valeurs $\vartheta$ d'un angle d'assiette relatif à un axe de roulis X de l'appareil volant (1) par rapport à l'horizon ; et
  - les moyens d'élaboration (23) sont en mesure de calculer et de fournir (25) au moins une valeur estimée préliminaire $\tilde{\alpha}$ de l'angle d'incidence $\alpha$, où $\tilde{\alpha}$ = f($q_c$, $\vartheta$, VS) et/ou $\tilde{\alpha}$ = f($q_c$, $n_z$), où VS est au moins une valeur de vitesse verticale, "Vertical Speed", calculée par les moyens d'élaboration (23) en fonction des valeurs de pression statique $p_s$.

2. Système (10) selon la revendication précédente, **caractérisé en ce que** les moyens d'élaboration (23) sont en mesure de calculer :

  - au moins une valeur estimée $\hat{\alpha}$ de l'angle d'incidence $\alpha$, où $\hat{\alpha}$ = f($\tilde{\alpha}$) ;
  - au moins une valeur estimée $\hat{\beta}$ de l'angle de dérapage $\beta$, où $\hat{\beta}$ = f($\tilde{\beta}$).

3. Système (10) selon la revendication précédente, **caractérisé en ce que** les moyens d'élaboration (23) comprennent des moyens de calcul d'évaluation analytique (24) aptes à calculer les valeurs estimées préliminaires $\tilde{\alpha}$ et $\tilde{\beta}$ ainsi que des moyens de calcul (26) aptes à calculer les valeurs estimées $\hat{\alpha}$ et $\hat{\beta}$.

4. Système (10), selon la revendication 1, **caractérisé en ce que** le système de mesure accélérométrique (11) est apte à mesurer directement des valeurs axiales $n_x$ d'accélération inertielle par rapport à l'axe X, et **en ce que** le système de mesure inclinométrique (15) est apte à mesurer ou calculer les valeurs $\phi$ d'un angle d'assiette de l'axe Y de l'appareil volant (1) par rapport à l'horizon.

5. Système (10), selon la revendication 1, **caractérisé en ce qu'**il comprend :

  - au moins un capteur gyroscopique (13) apte à mesurer directement les valeurs axiales p, q, r de vitesses angulaires par rapport aux axes X, Y, Z ; et/ou
  - moyens de détection GPS ("Global Positioning System") aptes à relever des valeurs de position et de vitesse GS, "Ground Speed", de l'appareil volant (1) par rapport au sol ; et/ou
  - au moins un détecteur de température statique et/ou total (31) apte à mesurer directement les valeurs de température T d'un milieu entourant l'appareil volant (1) ; et/ou
  - au moins un magnétomètre (33) apte à mesurer directement des valeurs $\psi$ d'angle de proue par rapport au nord magnétique terrestre ; et/ou
  - des moyens (33, 35) de saisie et de transmission vers les moyens d'élaboration (23) de signaux analogiques et numériques provenant d'autres capteurs ou sous-systèmes (37) de l'appareil volant (1).

6. Système (10), selon la revendication 1, **caractérisé en ce que** les moyens d'élaboration (23) sont en mesure de calculer et de fournir (25):

  - au moins une valeur de vitesse relevée sans correction IAS, "Indicated Air Speed", et au moins une valeur de vitesse relevée avec la correction des erreurs de position CAS, "Calibrated Air Speed" ; et/ou
  - au moins une valeur de vitesse CAS corrigée à travers la mesure de température TAS, "True Air Speed" ; et/ou
  - au moins une valeur du nombre de Mach.

7. Procédure de mesure et d'évaluation de données d'air et inertielles d'un appareil volant (1), de préférence à travers un système (10) selon l'une des revendications précédentes, pour estimer de manière indirecte au moins un angle d'incidence α, et un angle de dérapage P par rapport à une direction du vent relative Wn de l'appareil volant (1), la procédure comprend les phases suivantes :

- relever directement ou indirectement les valeurs de pression dynamique $q_c$ et éventuellement de pression statique $p_s$ ;
- mesurer directement au moins les valeurs axiales $n_y$ d'accélération inertielle de l'appareil volant (1) par rapport à un axe de tangage Y de l'appareil volant (1) ;
- calculer et fournir au moins une valeur estimée préliminaire $\tilde{\beta}$ de l'angle de dérapage β, où $\tilde{\beta} = f(q_c, n_y)$ ;

**caractérisé en ce que** la procédure comprend en outre les phases suivantes :

- éventuellement mesurer directement certaines valeurs axiales $n_z$ par rapport à un axe de lacet Z de l'appareil volant (1);
- éventuellement mesurer ou calculer des valeurs $\vartheta$ d'un angle d'assiette relatif à un axe de roulis X de l'appareil volant (1) par rapport à l'horizon ; et
- calculer et fournir au moins une valeur estimée préliminaire $\tilde{\alpha}$ de l'angle d'incidence α, où $\tilde{\alpha} = f(q_c, \vartheta, VS)$ et/ou $\tilde{\alpha} = f(q_c, n_z)$, où VS est une valeur de vitesse verticale, "Vertical Speed", calculée en fonction des valeurs de pression statique $p_s$.

8. Procédure selon la revendication précédente, **caractérisée en ce qu'**elle comprend les phases suivantes :

- calculer la valeur estimée préliminaire $\tilde{\alpha}$ de l'angle d'incidence α à travers la formule suivante :

$$\tilde{\alpha} = \frac{1}{2}\left[ K_\alpha \frac{Wn_z}{q_c}\left(1-\eta_\alpha\right) + \eta_\alpha\left(\vartheta - \tan^{-1}\frac{VS}{q_c}\right)\right] ;$$

- calculer la valeur estimée préliminaire $\tilde{\beta}$ de l'angle de dérapage β à travers la formule suivante :

$$\tilde{\beta} = \frac{1}{2}\left[ K_\beta \frac{Wn_y}{q_c}\left(1-\eta_\beta\right) + \eta_\beta\left(\tan^{-1}\frac{V_y}{q_c}\right)\right] ;$$

où W est un poids caractéristique de l'appareil volant (1) ; $K_\alpha$ et $K_\beta$ sont des constances qui sont évaluées théoriquement en fonction des caractéristiques aérodynamiques et géométriques de l'appareil volant (1) puis qui sont calculées de nouveau après une phase d'étalonnage ; $\eta_\alpha$ et $\eta_\beta$ sont des constances comprises entre zéro et un, selon le niveau d'étalonnage de la plate-forme ; $V_y$ est calculée à travers l'intégration de la valeur $n_y$ d'accélération inertielle par rapport à l'axe Y.

9. Procédure selon l'une des revendications 7 ou 8, **caractérisée en ce qu'**elle comprend les phases suivantes :

- mesurer directement les valeurs axiales $n_x$ d'accélération inertielle par rapport à l'axe X ; et/ou
- mesurer directement les valeurs $\phi$ d'angle d'assiette de l'axe Y de l'appareil volant (1) par rapport à l'horizon ; et/ou
- mesurer directement les valeurs axiales p, q, r des vitesses angulaires par rapport aux axes X, Y, Z.

10. Procédure selon l'une des revendications de 7 à 9, **caractérisée en ce qu'**elle comprend les phases suivantes consistant à calculer et à fournir:

- au moins une valeur estimée $\hat{\alpha}$ de l'angle d'incidence α, où $\hat{\alpha} = f(\tilde{\alpha})$;
- au moins une valeur estimée $\hat{\beta}$ de l'angle de dérapage β, où $\hat{\beta} = f(\tilde{\beta})$.

11. Procédure selon la revendication précédente, **caractérisée en ce qu'**elle comprend les phases suivantes :

- calculer la valeur estimée $\hat{\alpha}$ de l'angle d'incidence α à travers la formule suivante :

$$\hat{\alpha} = F_\alpha \sum_{i=1}^{h} \left( w_{\alpha i} f_i \left( \sum_{k=1}^{n} w_{ik} x_{\alpha,k} + b_{k0} \right) + b_{\alpha 0} \right)$$

où $x_{\alpha,k}$ est un élément du vecteur suivant

$$x_\alpha = \begin{bmatrix} \tilde{\alpha} & q_c & q & \phi & n_x & n_z \end{bmatrix};$$

- calculer la valeur estimée $\hat{\beta}$ de l'angle de dérapage $\beta$ à travers la formule suivante :

$$\hat{\beta} = F_\beta \sum_{i=1}^{h} \left( w_{\beta i} f_i \left( \sum_{k=1}^{n} w_{ik} x_{\beta,k} + b_{k0} \right) + b_{\beta 0} \right)$$

où $x_{\beta,k}$ est un élément du vecteur suivant

$$x_\beta = \begin{bmatrix} \tilde{\beta} & q_c & p & r & \phi & n_x & n_y & n_z \end{bmatrix};$$

où $F_{\alpha/\beta}$ est la fonction d'activation de la dernière couche de neurones ; $f_i$ est la fonction d'activation de la x-ième couche du réseau neuronal ; $w_{ik}$ et $w_{\alpha/\beta i}$ sont des coefficients du réseau neuronal caractérisés ou calculés pendant la phase d'étalonnage du capteur virtuelle ; $b_{k0}$ et $b_{\alpha/\beta 0}$ sont les offset du réseau neuronal caractérisés ou calculés pendant la phase d'étalonnage du capteur virtuelle ; h est le nombre de neurones de la couche cachée et de sortie ; n est le nombre d'éléments du vecteur d'entrée $x_{\alpha/\beta}$.

**12.** Procédure selon l'une des revendications de 7 à 11, **caractérisée en ce qu'**elle comprend les phases suivantes :

- relever les valeurs de position et de vitesse GS, "Ground Speed", de l'appareil volant (1) par rapport au sol ; et/ou
- mesurer directement les valeurs de température statique ou absolue (T) d'un milieu entourant l'appareil volant (1); et/ou
- mesurer directement les valeurs $\psi$ de proue par rapport au nord magnétique terrestre ; et/ou
- saisir et élaborer les signaux analogiques et numériques provenant d'autres capteurs ou sous-systèmes de l'appareil volant (1).

**13.** Procédure selon l'une des revendications de 7 à 12, **caractérisée en ce qu'**elle comprend les phases suivantes :

- calculer au moins une valeur de vitesse relevée sans correction IAS, "Indicated Air Speed", et au moins une valeur de vitesse relevée avec la correction des erreurs de position CAS, "Calibrated Air Speed" ; et/ou
- calculer au moins une valeur de vitesse CAS correcte à travers la mesure de température TAS, "True Air Speed"; et/ou
- calculer au moins une valeur du nombre de Mach.

FIG. 1

FIG. 2

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6466888 B
- US 4769759 A
- US 6273370 B
- US 6604029 B
- EP 1256863 A